# EUROPEAN PATENT SPECIFICATION

(11) **EP 0 377 690 B1**
(45) Date of publication and mention of the grant of the patent: **01.06.1994**
(21) Application number: 89905283.1
(22) Date of filing: 07.04.1989
(51) Int. Cl.: B62D 55/104

(54) **TRACK ROLLER FRAME ASSEMBLY**
RAUPENFAHRWERKSGESTELLZUSAMMENBAU
ENSEMBLE CHASSIS DE GALETS DE ROULEMENT

(30) Priority: 30.06.1988 US 213744
(43) Date of publication of application: 18.07.1990
(73) Proprietor: CATERPILLAR INC., Peoria Illinois 61629-6490 (US)
(72) Inventor: TONSOR, Andrew, J., East Peoria, IL 61611 (US); GEE, James, E., Washington, IL 61571 (US); NELSON, David, E., Peoria, IL 61615 (US); STEVENS, Samuel, B., Pekin, IL 61554 (US)
(74) Representative: Jackson, Peter Arthur
(86) International application number: PCT/US89/01430
(87) International publication number: WO 90/00133

(56) References cited:
- FR-A- 1 097 253
- US-A- 2 378 942
- US-A- 2 948 347
- US-A- 3 872 939
- US-A- 3 910 367
- US-A- 3 963 278
- US-A- 4 241 956
- US-A- 4 739 852
- US-A- 4 781 257

## Description

This invention relates generally to a tracked vehicle such as a combine harvester, earthmoving machine or the like, and more particularly to the lightweight, yet rugged construction of a track roller frame assembly therefor.

Most track laying vehicles or crawler tractors have two track roller frame assemblies which are pivotally mounted on aligned shafts secured to the rear of the main frame and which are adapted to limitedly swing in vertical, longitudinally oriented planes. Oscillation of the track roller frame assemblies is desirable to accommodate surface irregularities and to reduce shock loads, and the front portions thereof are often interconnected by an equalizer bar or generally equivalent leaf spring assembly which is centrally connected to the main frame. Exemplifying the art in this area are: U.S. -A- 3,899,218 and U.S. -A- 4,650,260.

Historically, the track roller frame assemblies have been mounted on the main frame for pivotal movement about the transverse axis of the driven rear sprocket wheels. But, it has been found that when large implement forces are imposed on the bearings of the sprocket wheels, such as are encountered when using a bulldozer blade, there is a marked decrease in the surface life of the bearings and associated elements. Accordingly, the track roller frame assemblies have often been pivoted on fixed shafts connected to the main frame and which are located forwardly of the sprocket wheels so that operating forces on the track roller frame assemblies and on the implement can be directed thereto independent of the sprocket wheels. In either case, the equalizer bar is supported on the front portions of the track roller frame assemblies.

U.S. -A- 3,872,939, U.S. -A- 3,899,218 mentioned above; and U.S -A- 3,963,278 typify the double-rail track roller frame construction that has been used successfully for many years. In said construction the superstructure loads are transmitted through the inboard and outboard rails to the opposite ends of plurality of track roller shafts and to the supporting roller wheels. But these heavy frames are difficult to manufacture and too expensive.

One track roller frame assembly produced by us deviated from the usual double rail form by utilizing a longitudinally oriented, vertical steel plate for the primary body portion thereof. This thick and overly heavy plate was notched at the top to receive the tubular casing for the usual recoil mechanism, and was triangularly notched at the bottom to receive a corresponding plurality of laterally thick mounting brackets for the roller wheels. The roller frame was pivotally secured to the main frame by a collar connected to the rear of the plate, and also by an undesirable diagonal brace secured to the main frame laterally inwardly of the collar on the same axis.

One other track roller frame assembly is disclosed in our US-A-4,781,257. It is simplified from the usual double-rail beam system in that it includes an elongate lower beams weldably connected to the lower surface of an upper tubular member. But, the lower beam is relatively narrow and complex in construction from the standpoint it has two side plates and two cross strips which are welded together by extended length and costly weld joints. Moreover, the relatively abrupt transition between the rear portion of the hollow track roller frame and a solid plate-like extension is also overly complex and undesirable.

Therefore, what it desired is a track roller frame assembly that is rugged and reliable, and yet is of a light weight and economical structure. For example, such assembly should have a relatively limited number of major portions which are easy to assemble and connect to each other, and should make maximum use of rollably formed channular or tubular shapes in cross section.

US-A-3963278 discloses a track roller frame assembly of the type arranged to be connected to a vehicle main frame and arranged to be supported by a plurality of roller wheels, the assembly comprising a main body including an elongate base supported by the roller wheels when in use and having first and second end portions, and a collar connected to the tubular beam of the main body and defining a transverse opening therethrough, and, according to the present invention, such an assembly is characterised by the elongate base being of formed channular or formed tubular rectangular cross section and having a tubular casing overlyingly connected to the first end portion, and a plate structure overlyingly connected to the second end portion of the base for forming therewith a tubular beam of generally rectangular cross section of a depth substantially greater than the width and a back-up shoulder for strengthening connection with the tubular casing.

What is provided is a track roller frame assembly that is very strong, and yet it is of a lightweight and economical structure because it makes maximum use of formed c-shaped channels or formed rectangular elements in cross section. The major portions thereof are limited in number and easy to connect to each other by a minimum of simple elongate weld joints. Also, the weight of the vehicle's superstructure is transmitted through the track roller frame assembly in a relatively symmetrical manner with respect to a longitudinal and central vertical plane extending through the track roller frame, and to the supporting roller wheels so as to reduce the overall stresses produced therein. Moreover, the track roller frame assembly is pivotably secured to the vehicle main frame near one end, is connectable to an equalizer bar near the other end, and is constructed to releasably support a drive wheel while simultaneously transmitting the torque forces associated with powerably rotating the drive wheel in a relatively uniform and/or symmetrical manner directly to the track roller frame.

In the accompanying drawings:-
Fig. 1 is a fragmentary and diagrammatic right side elevational view of a combine harvester employing a track roller frame assembly constructed in accordance with the present invention with the rear outer wheel portion removed and a portion of the front outer wheel portion removed to better illustrate details thereof, and illustrating only a portion of a harvesting implement on the front thereof;
Fig. 2 is a diagrammatic and enlarged fragmentary top plan view of the right rear wheel and associated suspension structure with portions thereof illustrated in cross section, and as taken generally along line II-II of Fig. 1;
Fig. 3 is a diagrammatic, enlarged, and fragmentary vertical cross section of the track roller frame assembly as taken along line III-III of Fig. 1;
Fig. 4 is a side elevational view of the track roller frame shown in Figs. 1-3;
Fig. 5 is a top plan view of the track roller frame shown in Fig. 4;
Fig. 6 is a cross sectional view of the track roller frame as taken along line VI-VI of Fig. 4;
Fig. 7 is another cross sectional view of the track roller frame as taken along line VII-VII of Fig. 4;
Fig. 8 is a cross sectional view of a second embodiment track roller frame that can be compared with Fig. 6;
Fig. 9 is a diagrammatic, fragmentary, side elevational view of a third embodiment track roller frame;
Fig. 10 is a cross sectional view of the third embodiment track roller frame as taken along line X-X of Fig. 9; and
Fig. 11 is another cross sectional view as taken along line XI-XI of Fig. 9.

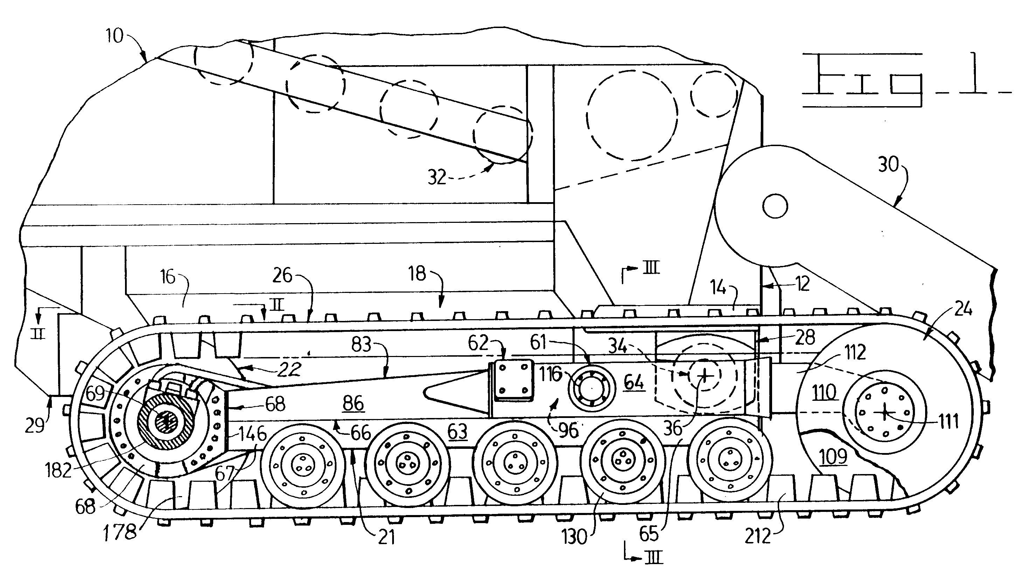

Referring to of Fig. 1, there is shown a combine harvester vehicle 10 having a longitudinally extending main frame 12 with a first end or front end 14 and a second end or rear end 16 located respectively to the right and left when viewing the drawing. Similar right and left hand track-type undercarriages 18 which are essentially mirror images of each other, one of which is illustrated, are located generally elevationally below the main frame and provide the sole support for the vehicle. Each undercarriage includes a track roller frame assembly 21 having a rear drive wheel 22 and a front idler wheel 24, and a ground-engaging track or drive belt 26 that encircles these wheels in the form of an endless loop in a well-known manner. A suspension structure 28 used in conjunction with the undercarriages provides the support for the superstructure 29 of the combine harvester 10 and permits the harvesting of crops such as sugar cane, vegetables, rice and grains in predominantly soft and wet ground conditions. A conventional front-mounted harvesting implement 30, only a fragment of which is illustrated, is effective to gather the crop with forward movement of the vehicle and to urge it upwardly and rearwardly through the centrally located throat of a suitable threshing mechanism 32. It is to be understood that the harvesting mechanism itself could be of any suitable form, and that the depiction of the present invention within the context of a combine harvester is for purposes of example only, the invention also being adaptable to other forms of track-type or crawler vehicles.

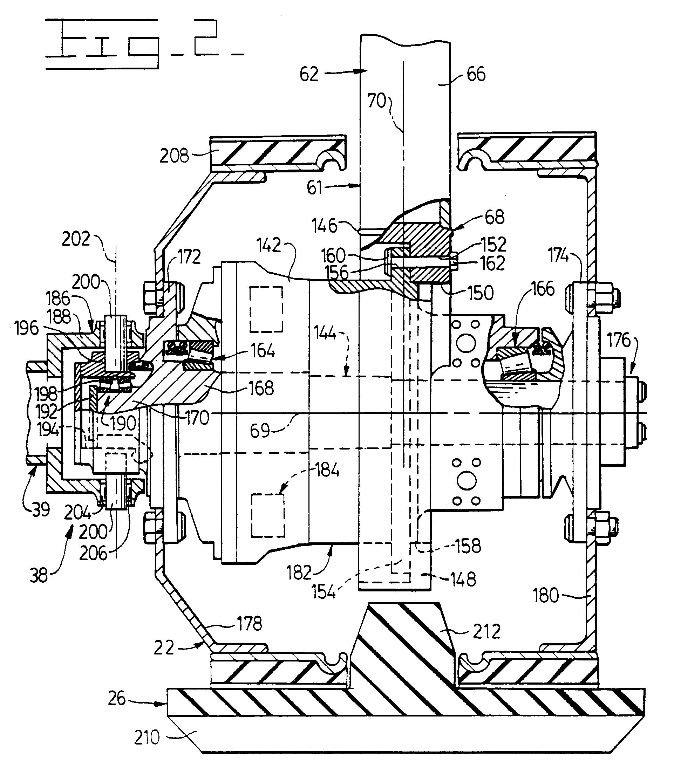

Basically, the suspension structure 28 includes pivot means or a pair of laterally separated pivot joints 34 for pivotally connecting the undercarriages 18 supportably to the front end 14 of the main frame 12 and permitting pivotal movement of the track roller frame assemblies 21 about a common horizontal and transversely oriented pivot axis 36. As is only partially illustrated in Fig. 2, the suspension structure further includes coupling means or a coupling assembly 38 including a centrally pivoted equalizer bar 39 for centrally supporting the rear end 16 of the main frame on the track roller frame assemblies 21, preventing uncontrolled lateral spreading of the undercarriages, and transferring side forces laterally between the undercarriages.

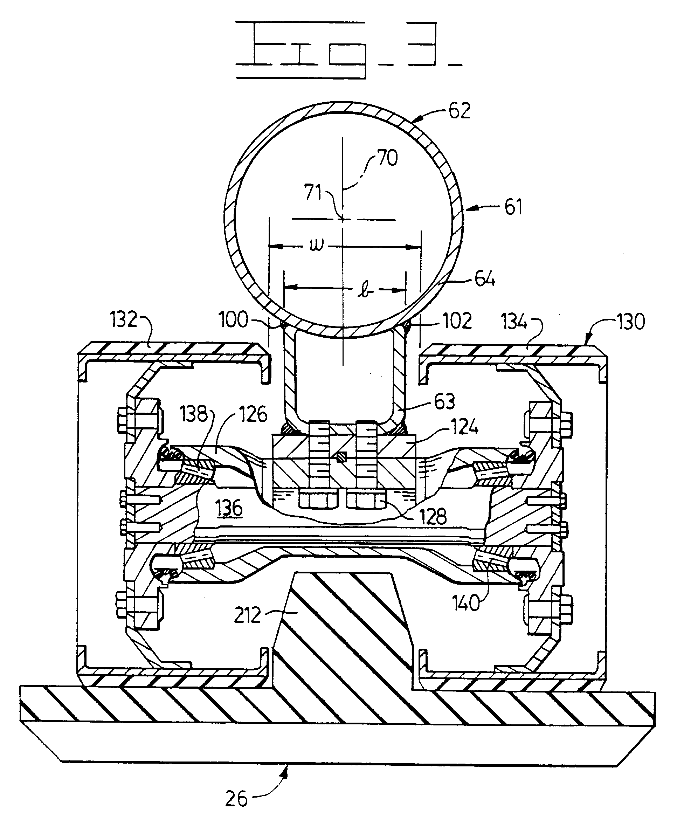

As is shown in Figs. 3, 4 and 5, the right hand track roller frame assembly 21 includes a track roller frame 61 having an elongate main body 62 defined primarily by an elongate rollably formed channel-shaped base or beam 63, a tubular casing 64 overlyingly connected to a front end portion 65 of the base, and a rollably formed reinforcing or transition plate structure 66 overlyingly connected to a rear end portion 67 of the base and defining therewith an enlarged and generally rectangular tubular beam 83 having a structurally strong section modulus for its weight. The track roller frame also includes collar 68 connected to the rear end of the main body 62 for supporting the rear drive wheel 22 for rotation about a horizontal and transversely oriented second axis 69. These major portions of the track roller frame are preferably weldably secured together and are generally arranged along a longitudinally oriented, vertical central plane 70 passing through a central axis 71 of the tubular casing 64 as shown in Fig. 3.

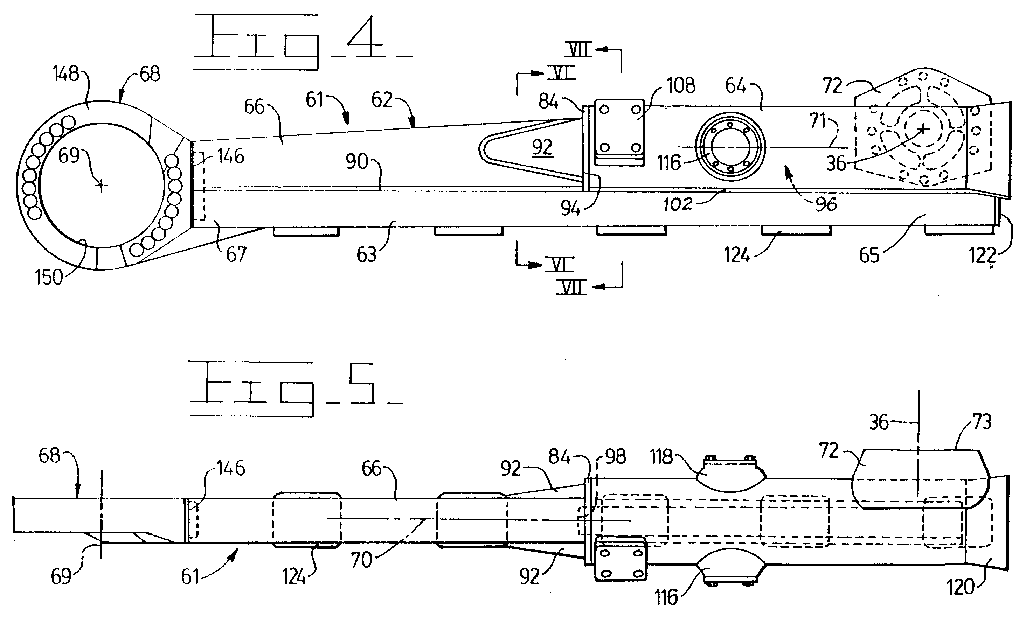

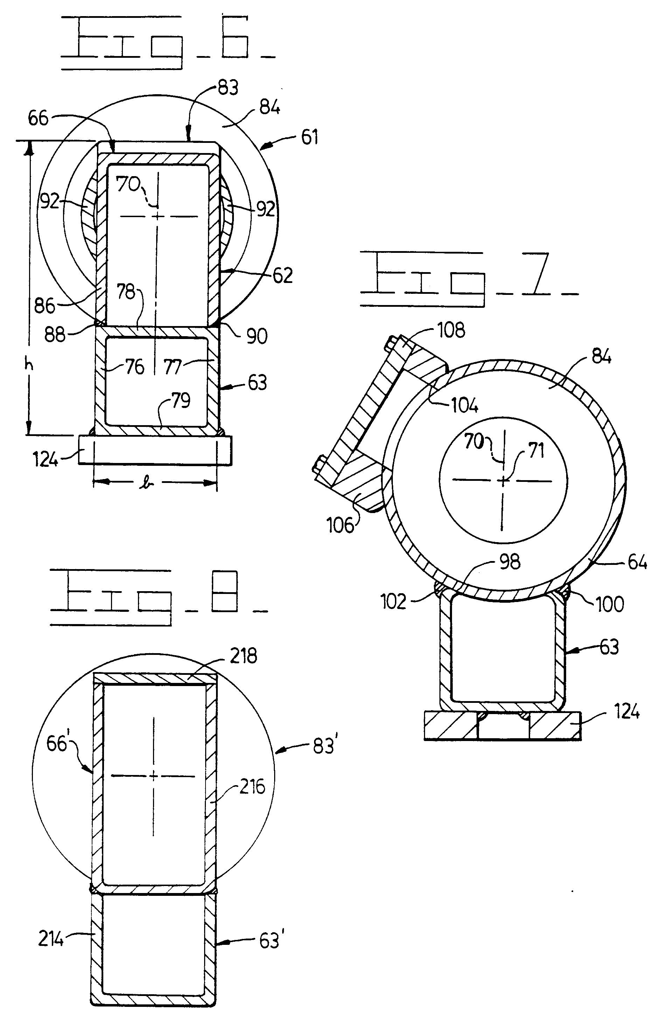

As is shown best in Figs. 4 and 5, a support bracket 72 is rigidly secured to the inboard side of the tubular casing 64 by welding or the like, and preferably defines a flat, vertically oriented, inside mounting surface 73 parallel to the central plane 70. A stubshaft, not illustrated, can be releasably secured to the mounting surface 73 to allow oscillating of the track roller frame 21 in a conventional manner.

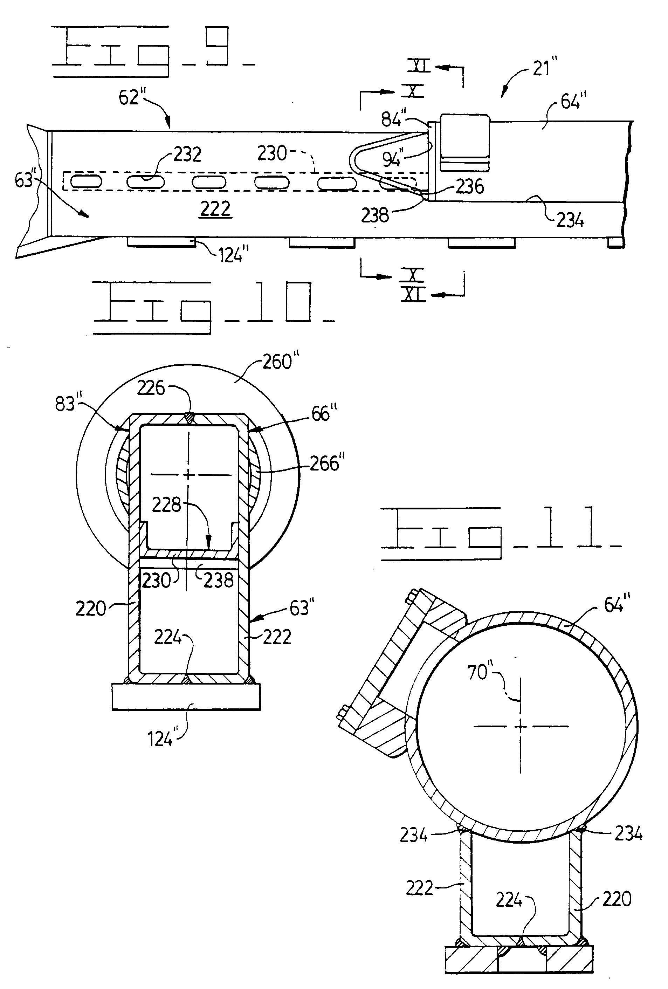

The lightweight, yet strong construction of the track roller frame 61 can be appreciated by reference to 4 through 7. Particularly, the channel-shaped base 63 has a fully rollably formed rectangular cross section as defined by laterally inner and outer sidewalls 76 and 77, and upper and lower cross members or plates 78 and 79 from the rear end portion 67 forwardly to a cylindrical end plate 84 closing the rear portion of the tubular casing 64. The transition plate structure 66 includes a rollably formed plate 86 having an inverted U-shaped cross section which is connected to the channel-shaped base 63 by inner and outer longitudinally oriented weld joints 88 and 90 strategically located elevationally generally centrally of the overall depth of the main body 62 adjacent to the neutral bending plane thereof. The transition plate structure 66 further includes a pair of tapered and convexly shaped bracing members 92 which are weldably secured to the sides of the U-shaped plate 86 and to the end plate 84 for additional stiffness. Thus it can be appreciated from viewing Fig. 6 that the plate structure 66 and the base 63 collectively form the enlarged tubular beam 83 of substantial elevational depth or height "h" adjacent the end plate 84. Moreover, as shown in Figs. 4 and 5 the plate structure 66 and base 63 collectively form a forwardly facing back-up shoulder 94 for the end plate 84 and the tubular casing 64 that strengthens the main body 62 and better resists the longitudinal forces associated with any conventional recoil mechanism 96 located within the tubular casing, although not illustrated. Forwardly of the end plate 84, an upper longitudinal slot 98 is formed through the top plate member 78 of the base 63 as can be noted by reference to Figs. 6 and 7 in order to nestably receive the tubular casing 64. Inner and outer weld joints 100 and 102, which are substantially colinear with the weld joints 88 and 90 respectively, connect the casing to the base. An access opening 104 is formed radially through the casing, an annular mounting flange 106 is connected to the casing thereat, and a cover plate 108 is releasably secured to the mounting flange to permit service access to any recoil mechanism 96 disposed within the casing.

In order to apply proper tension to the track belt 26 and to allow obstacles in the path of the vehicle to be traversed with minimum shock to the undercarriage 18, the front idler wheel 24, including inner and outer wheel portions 109 and 110, is cantilererably supported for rotation about a transverse horizontal axis 111 by a carrier 112 telescopically received in the tubular casing 64. The carrier 112 is centrally disposed between the wheel portions and is resiliently urged to the right when viewing Fig. 1 or in a direction away from the rear drive wheel 22 by the conventional resilient recoil mechanism 96. As is illustrated only partially in Figs. 1, 4 and 5, a pair of diametrically opposite twist prevention devices 116 and 118 of conventional construction are provided which extend radially into the tubular casing 64 to maintain a preselected angular orientation of the idler wheel carrier 112 about the central axis 71 of the tubular casing 64 and to maintain wheel axis 111 substantially horizontal. And at the forward end of the tubular casing the pivot pin support bracket 72 and a bearing and seal supporting ring 120 are weldably secured to the casing. Preferably, a closure plate 122 is weldably secured to the ring and the front face of the base.

Referring now to Fig. 3, a plurality of longitudinally spaced apart mounting pads 124 are weldably secured to the bottom surface of the channel-shaped base 63, and a formed tubular casing 126 is releasably secured to each pad by a plurality of upwardly extending threaded fasteners or bolts 128. A roller wheel 130 includes an inboard wheel portion 132 and an outboard wheel portion 134 interconnected by a live cross shaft 136, and a pair of laterally spaced bearings 138 and 140 are seated within the tubular casing for rotatably supporting the cross shaft. This view also illustrates the relationship of the relatively narrow width "b" of the channel-shaped base 63 to the clearance "w" between the wheel portions 132 and 134.

Referring to Fig. 2, the rear wheel 22 of the track roller frame assembly 21 includes a generally tubular housing or support member 142, and a shaft assembly 144 rotatably supported therewithin. And, the supporting collar 68 is annular and rigidly secured to the main body 62 of the track roller frame 61 by a weld joint 146 at the front face of the collar as can be appreciated by reference to Figs. 1, 4 and 5. The supporting collar has an internal mounting flange 148 which defines a cylindrical pilot bore or opening 150 therethrough generally concentrically arranged with the second axis 69, and a plurality of cylindrical passages 152 therethrough spaced about the bore. In a cooperating manner the housing 142 has an external mounting flange 154 defining a plurality of cylindrical passages 156 therethrough, and an external cylindrical pilot portion 158 which is insertable in the pilot bore 150. A plurality of fluted studs 160 are rigidly secured in the passages 156 of the mounting flange 154 which extend laterally outwardly through the passages 152, and a plurality of retaining nuts 162 are screwthreadably installed thereon in order to releasably couple the housing 142 to the collar 68.

The shaft assembly 144 is rotatably supported within the housing 142 by an inboard tapered roller bearing 164 and an outboard tapered roller bearing 166 laterally spaced symmetrically on each side of the central plate 70. The shaft assembly includes an output shaft 168 defining a cylindrical inner end portion 170 and an inboard flange member 172, and an outboard flange member 174 is releasably and nonrotatably secured to the shaft by a conventional retention device 176. Fig. 2 also shows that the drive wheel 22 has inner and outer wheel portions 178 and 180 which are releasably secured to the flange members 172 and 174 respectively.

Each one of the track roller frame assemblies 21 includes a two speed or dual displacement hydraulic drive motor 182 for independently powerably rotating each of the rear wheels 22 along its respective transverse and horizontal axis 69. Although not illustrated in Fig. 2, the hydraulic drive motor is preferably located radially within the tubular housing 142 for powerably rotating the shaft assembly 144. Moreover, the hydraulic drive motor 182 is also preferably located axially between the flange members 172 and 174 and/or the wheel portions 178 and 180. An auxiliary disc-type parking brake 184 is also advantageously included within the housing. Each hydraulic drive motor is of the reversible radial piston type having a plurality of internal rollers that roll on a plurality of exterior cams as is known in the art, although not illustrated. Such motors are, for example, commercially produced by Poclain Hydraulics of France and are highly efficient in producing high torque either in a low speed range or a high speed range. In order to obtain the high range and to increase the output speed, the pressure supply to half the pistons is bypassed through a suitable control assembly, not illustrated.

An outer coupling device 186 is shown in Fig. 2 that couples with an unusual type of action a bifurcated outer end 188 of the equalizer bar 39 with the rotatable shaft 168 of the rear drive wheel 22 along the transverse axis 69. The coupling device includes a pair of tapered roller bearings 190 which are internally seated in an opposing relation on the cylindrical inner end portion 170 of the shaft 168, and which are secured in place by a releasable thrust-transmitting retaining plate 192. These roller bearings are seated within a cylindrical bore 194 of an annular trunnion member 196, and individually engage a thrust ring 198 located between them. The trunnion member 196 supports a pair of oppositely extending pivot pins 200 arranged along a generally horizontal common axis 202 disposed in a longitudinally oriented vertical plane. Aligned cylindrical bores 204 formed in the outer end 188 of the equalizer bar are adapted to receive sleeve or needle bearings 206, and these bearing rotatably receive these pins. The axis 202 of the pivot pins intersects the transverse axis 69.

Fig. 2 also illustrates a cross sectional view of the preferred endless track belt 26 which is defined by a relatively flat elastomeric body 208 having a plurality of inclined external ground-engaging bars 210 and a plurality of internal guide members 212 integrally formed therewith. The belt is preferably reinforced by internal cables or the like, not illustrated, so that it is substantially inextensible.

As is illustrated in Fig. 8, a second embodiment of the tubular beam 83' is shown as including a channel-shaped base 63' consisting essentially of a rollably formed plate 214 of U-shaped cross section, and an upper box plate structure 66' including a formed plate 216 of U-shaped cross section and a top plate 218. In this regard, those elements similar to those described in connection with the first embodiment are identified by the same reference numerals with a prime indicator appended thereto.

A third embodiment roller frame main body 62'' is partially illustrated in Figs. 9-11, and includes a channel-shaped base 63'' primarily formed by a first or inboard side plate 220 and a second or outboard side plate 222 interconnected by a longitudinally oriented, central weld joint 224 at the bottom thereof. In this instance, the plate structure 66'' overlyingly connected to the rear portion of the base 63'' includes the integrally formed upper portions off both side plates which are generally of a C-shaped cross section. A longitudinally oriented, central weld joint 226 secures the side plates together at the upper part thereof, and the plate structure 66'' further includes a cross bracing device 228 between the side plates for structurally strengthening the main body 62''. Specifically, the cross bracing device includes an elongate channel member 230 of U-shaped section which spans laterally between the side plates and is connected thereto by a plurality of annular or plug-type weld joints 232 as shown in Fig. 9. Each of the side plates 220 and 222 is formed to define a forwardly facing back-up shoulder 94'', an upwardly facing casing support edge 234 and a profiled slot 236 that receives a 1/4 round cross piece 238 having a cross section equivalent to one-fourth of a cylindrical rod. The channel member 230 is seated on the cross piece 238, and the rounded profile of the shaped cross piece tends to minimize internal stresses at the intersection of the shoulder 94'' and the supporting edges 234 caused by bending of the main body of the track roller frame assembly 21'' in use.

In operation, the vehicle 10 is driven by the operator in such a way that the output shafts 168 of the hydraulic drive motors 182 shown in Fig. 2 can be independently and selectively driven at any ground speed within a low working speed range or at an expanded traveling speed range with a relatively higher maximum rate of speed. A suitable control apparatus, not illustrated, can selectively and proportionately cause more flow to one of the hydraulic drive motors and less flow to the opposite hydraulic drive motor so that the vehicle can be controllably steered in the desired direction. Since one hydraulic drive motor can be locked or even controllably reversed in rotational direction while the opposite one is rotating in the forward direction, a compact pivot turn of the combine harvester can be easily achieved. Also, at any time the disc type brakes 184 may be simultaneously applied by the vehicle operator to slow down or to brake the vehicle. Of course, the hydraulic drive motors can be individually hydrostatically braked as is known in the art for providing the usual service braking function.

When the vehicle 10 travels over uneven terrain, for example, the rearward end of the right track roller frame assembly 21 may swing downwardly about the front pivot axis 36 while the rearward end of the left track roller frame assembly swings upwardly about the same front pivot axis due to their common connection to the centrally pivoted equalizer bar 39 as can be appreciated by reference to Figs. 1 and 2. As the track roller frame assemblies move in opposite directions, the equalizer bar will swing about its center in the usual way and cause the left and right pivot pins 200 to also travel in slightly arcuate paths as viewed from the rear of the vehicle 10. And yet the transverse axis 69 will remain parallel to the front pivot axis 36.

The wheel or motor housing 142 shown in Fig. 2 is laterally centrally mounted on the track roller frame 61, and the hydraulic drive motor 182 is disposed radially therewithin in a protected location laterally within the inner and outer wheel portions 178 and 180, and generally within the width envelope of the drive belt 26. Thus the hydraulic drive motor is less susceptible to possible damage and there is less debris build-up than would be the case if it extended laterally beyond the belt. The tension loads on the drive belt due to the carrier 112 being urged forwardly or to the right when reviewing Fig. 1 in a continuously resilient manner by the recoil mechanism 96 are directed relatively evenly or symmetrically through the inner and outer wheel portions and to the shaft assembly 144. Thereafter such forces are directed through the laterally separated inner and outer roller bearings 164 and 166 to the housing 142, and to the central mounting flange 154 in two relatively equivalent force transmitting paths to the supporting collar 68. Note specifically that the housing mounting flange 154 is on the central plane 70 of the track roller frame assembly 21 so that the torque loads due to the hydraulic drive motor are also substantially directly directed thereto along this plane. The recoil mechanism 96 also acts along the central axis 71 of the tubular casing 64 to urge the carrier 112 forwardly to provide the desired tension to the drive belt 26 on the wheels 22 and 24 for solely frictional engagement with the wheel portions 109, 110, 178 and 180. These belt tension loads are transferred to the tubular casing 64, the transition structure 66, the channel-shaped base 63, and to this supporting collar 68 symmetrically along the central plane 70 as can be visualized by reference to Figs. 1-7.

By the term "channel-shaped base" 63 it is meant that at least one bottom plate and two side plates are provided to define a U-shaped portion in cross section, and the upper part thereof can, in effect, optionally be provided with a separate top plate as shown in Figs. 8 and 10 or be integrally formed with the side plates as shown in Fig. 6 to define a rectangular beam in cross section with no lower weld joints. Alternately, the cross bracing device 228 of Fig. 10 can be a plurality of cross pieces spaced longitudinally between the sideplates, although not illustrated, so that the channel shaped base is internally in open communication with the upper plate structure 66'' that completes the cross section into the tubular beam 83''.

The track roller frame 61, front and rear wheel assemblies 24 and 22, the track belt 26, and the hydraulic drive motors 182 at one side of the vehicle 10 can be very simply removed as a unit from the main frame 12. It is only necessary to place a support such as an adjustable jack, not illustrated, under the front end 14 of the main frame to enable the pivot joint 34 to be uncoupled. Another support, not illustrated, can be placed under the rear end 16 of the main frame 12 to permit the coupling assembly 38 to be uncoupled. With the disassembly of any hydraulic and/or electric lines, this frees the entire undercarriage 18 from the main frame.

In view of the foregoing, it is apparent that the track roller frame assemblies 21 of the present invention are rugged in construction and very economical to manufacture due to the relatively limited number of major portions thereof, the relatively limited length of connecting weld joints, and the location and simplicity of the weld joints. Moreover, the forces transmitted longitudinally along the full length of the track roller frame assemblies are directed generally along the central plane 70, and the weight loads of the superstructure 29 are transmitted through the channel-shaped base 63 and to the supporting wheels 22, 24 and 130 along the central plane so that the construction is symmetrically loaded and capable of being made of rollably formed steel materials which are very economical to manufacture.

Preferably, the tubular beams 83 are of substantially rectangular cross section and have a height "h" equal to approximately two to three times the width "b" to provide the desired section modulus. And while the lower channel-shaped base 63 and the upper reinforcing or transition plate structure 66 are shown as including at least two major rollably formed steel plates which are welded together in the embodiments of Figs. 6, 8 and 10, it is further contemplated that the main body 62 exclusive of the tubular casing 64 can also be of an integrally cast steel construction without departing from the spirit of the present invention.

## Claims

1. A track roller frame assembly (21) of the type arranged to be connected to a vehicle main frame (12) and arranged to be supported by a plurality of roller wheels (130), the assembly comprising a main body (62) including an elongate base (63) supported by the roller wheels (130) when in use and having first and second end portions (65,67), and a collar (68) connected to the tubular beam (83) of the main body (62) and defining a transverse opening (150) therethrough, characterised by the elongate base (63) being of formed channular or formed tubular rectangular cross section and having a tubular casing (64) overlyingly connected to the first end portion (65), and a plate structure (66) overlyingly connected to the second end portion (67) of the base (63) for forming therewith a tubular beam (83) of generally rectangular cross section of a depth substantially greater than the width and a back-up shoulder (94) for strengthening connection with the tubular casing (64).

2. An assembly (21) according to claim 1, wherein the second end portion (67) of the base (63) is of formed tubular rectangular cross section.

3. An assembly (21) according to claim 2, wherein the first end portion (65) of the base (63) defines an upper longitudinal slot (98) for nestably receiving the tubular casing (64) therein.

4. An assembly (21) according to claim 2, wherein the plate structure (66) includes a formed plate (86) having a generally inverted U-shaped cross section.

5. An assembly (21) according to claim 4, wherein the main body (62) includes a cylindrical end plate (84) connected between the tubular casing (64) and the back-up shoulder (94) of the plate means (66).

6. An assembly (21) according to claim 5, wherein the plate structure (66) includes a pair of convexly shaped bracing members (92) connected to the formed plate (86) and the end plate (84).

7. An assembly (21) according to claim 1, wherein the main body (62) includes a plurality of roller wheel mounting pads (124) secured to the bottom surface of the base (63).

8. An assembly (21) according to claim 1, wherein the tubular casing (64) has a central axis (71) and a longitudinally oriented, vertical central plane (70) passing through the central axis (71), and the collar (68) defines an internal mounting flange (148) located substantially on the central plane (70).

9. An assembly (21) according to claim 1, wherein the first end portion (65) of the base (63) is of a generally U-shaped, integrally formed cross section and weldably connected to the tubular casing (64).

10. An assembly (21) according to claim 9, wherein the second end portion (67) of the base (63) is of a generally rectangular, integrally formed cross section weldably connected to the plate structure (66).

11. An assembly (21) according to claim 1, wherein the tubular beam (83) is generally rectangular and has a height "h" equal to approximately two to three times the width "b".

12. An assembly (21') according to claim 1, wherein the base (63') includes a first formed plate (214) of U-shaped cross section, and the plate structure (66') includes a second formed plate (216) of U-shaped cross section and a top plate (218).

13. An assembly (21) according to claim 1, wherein one of the base (63) and the plate structure (66) includes a rollably formed plate having a rectangular cross section and the other one includes a rollably formed plate having a U-shaped cross section.

14. An assembly (21'') according to claim 1, wherein the tubular beam (83'') includes inboard and outboard side plates (220,222) of generally C-shaped cross section.

15. An assembly (21'') according to claim 14, wherein the tubular beam (83'') includes cross bracing means (228) structurally interconnecting the side plates (220,222) for strengthening the main body (62'').

16. An assembly (21) according to claim 1, wherein one of the base (63) and the plate structure (66) includes a first plate (76,77,78,79) rollably formed into a tube of rectangular cross section and the other one includes a second plate (86) rollably formed into a channel of U-shaped cross section.

17. An assembly (21) according to claim 16, wherein the base (63) and the plate structure (66) collectively define a tubular beam (83) of generally rectangular cross section having a depth substantially greater than the width.

18. An assembly (21) according to claim 17, wherein the tubular beam (83) has a height "h" equal to approximately two to three times the width "b".

19. An assembly (21) according to claim 16, wherein the plate structure (66) includes a cylindrical end plate (84) and defines a back-up shoulder (94), the cylindrical end plate (84) being engaged between the shoulder (94) and the tubular casing (64).

## Patentansprüche

1. Fahrwerkrollenrahmenanordnung (21) von der Bauart, die angeordnet ist, um mit einem Fahrzeughauptrahmen (12) verbunden zu werden, und die angeordnet ist, um von einer Vielzahl von Rollenrädern (130) getragen zu werden, wobei die Anordnung folgendes aufweist: einen Hauptkörper (62) mit einer langgestreckten Basis (63), die bei der Verwendung von den Rollenrädern (130) getragen wird und erste und zweite Endteile (65, 67) besitzt, und einen Kragen (68), der mit dem rohrförmigen Träger oder Balken (83) des Hauptkörpers (62) verbunden ist und eine querverlaufende Öffnung (150) dahindurch definiert,
dadurch **gekennzeichnet,** daß die langgestreckte Basis (63) einen geformten kanalförmigen, oder geformten rohrförmigen rechteckigen Querschnitt besitzt, und ein rohrförmiges Gehäuse (64), das in darüberliegender Weise mit dem ersten Endteil (65) verbunden ist, und eine Plattenstruktur (66) aufweist, die in darüberliegender Weise mit dem zweiten Endteil (67) der Basis (63) verbunden ist, um damit einen rohrförmigen Träger (83) zu bilden mit allgemein rechteckigem Querschnitt mit einer Tiefe, die wesentlich größer ist als die Breite, und um eine Stützschulter (94) zu bilden zur verstärkenden Verbindung mit dem rohrförmigen Gehäuse (64).

2. Anordnung (21) gemäß Anspruch 1, wobei der zweite Endteil (67) der Basis (63) einen geformten rohrförmigen rechteckigen Querschnitt besitzt.

3. Anordnung (21) gemäß Anspruch 2, wobei der erste Endteil (65) der Basis (63) einen oberen Längsschlitz (98) definiert zur einsteckbaren bzw. passenden Aufnahme des rohrförmigen Gehäuses (64) darin.

4. Anordnung (21) gemäß Anspruch 2, wobei die Plattenstruktur (66) eine geformte Platte (86) umfaßt mit einem allgemein umgekehrt U-förmigen Querschnitt.

5. Anordnung (21) gemäß Anspruch 4, wobei der Hauptkörper (62) eine zylindrische Endplatte (84) umfaßt, die zwischen dem rohrförmigen Gehäuse (64) und der Stützschulter (94) der Plattenmittel (66) verbunden ist.

6. Anordnung (21) gemäß Anspruch 5, wobei die Plattenstruktur (66) ein Paar von konvex geformten Aussteifungsgliedern (92) umfaßt, die mit der geformten Platte (86) und der Endplatte (84) verbunden sind.

7. Anordnung (21) gemäß Anspruch 1, wobei der Hauptkörper (62) eine Vielzahl von Rollenradbefestigungskissen oder -flächen (124) umfaßt, die an der Bodenoberfläche der Basis (63) befestigt sind.

8. Anordnung (21) gemäß Anspruch 1, wobei das rohrförmige Gehäuse (64) eine Mittelachse (71) und eine in Längsrichtung orientierte vertikale Mittelebene (70) besitzt, die durch die Mittelachse (71) hindurchgeht, und wobei der Kragen (68) einen internen Befestigungsflansch (148) definiert, der im wesentlichen auf der Mittelebene (70) angeordnet ist.

9. Anordnung (21) gemäß Anspruch 1, wobei der erste Endteil (65) der Basis (63) einen allgemein U-förmigen, integral ausgeformten Querschnitt besitzt und durch Schweißen mit dem rohrförmigen Gehäuse (64) verbunden ist.

10. Anordnung (21) gemäß Anspruch 9, wobei der zweite Endteil (67) der Basis (63) einen allgemein rechteckigen, integral ausgeformten Querschnitt besitzt und durch Schweißen mit der Plattenstruktur (66) verbunden ist.

11. Anordnung (21) gemäß Anspruch 1, wobei der rohrförmige Träger (83) allgemein rechteckig ist und eine Höhe "h" besitzt, die ungefähr zwei bis drei Mal so groß ist wie die Breite "b".

12. Anordnung (21') gemäß Anspruch 1, wobei die Basis (63') erste geformte Platte (214) mit einem U-förmigen Querschnitt umfaßt und wobei die Plattenstruktur (66') eine zweite geformte Platte (216) mit U-förmigem Querschnitt sowie eine obere oder Deckelplatte (218) umfaßt.

13. Anordnung (21) gemäß Anspruch 1, wobei eines der folgenden Elemente, nämlich entweder die Basis (63) oder die Plattenstruktur (66), eine durch Walzen geformte Platte mit einem rechteckigen Querschnitt umfaßt und wobei das andere davon eine durch Walzen geformte Platte mit einem U-förmigen Querschnitt umfaßt.

14. Anordnung (21'') gemäß Anspruch 1, wobei der rohrförmige Träger (83'') Innenbord- und Außenbordseitenplatten (220, 222) mit allgemein C-förmigem Querschnitt umfaßt.

15. Anordnung (21'') gemäß Anspruch 14, wobei der rohrförmige Träger (83'') Querversteifungsmittel (228) umfaßt, die die Seitenplatten (220, 222) zur Verstärkung des Hauptkörpers (62'') strukturell miteinander verbinden.

16. Anordnung (21) gemäß Anspruch 1, wobei eines der folgenden Elemente, nämlich entweder die Basis (63) oder die Plattenstruktur (66), eine erste Platte (76, 77, 78, 79) umfaßt, die durch Walzen in ein Rohr mit rechteckigem Querschnitt geformt wurde, und wobei das andere davon eine zweite Platte (86) umfaßt, die durch Walzen in einen Kanal mit U-förmigem Querschnitt geformt wurde.

17. Anordnung (21) gemäß Anspruch 16, wobei die Basis (63) und die Plattenstruktur (66) gemeinsam einen rohrförmigen Träger (83) mit allgemein rechteckigem Querschnitt definieren, der eine Tiefe besitzt, die wesentlich größer ist als Breite.

18. Anordnung (21) gemäß Anspruch 17, wobei der rohrförmige Träger (83) eine Höhe "h" besitzt, die ungefähr zwei bis drei Mal so groß ist wie die Breite "b".

19. Anordnung (21) gemäß Anspruch 16, wobei die Plattenstruktur (66) eine zylindrische Endplatte (84) umfaßt und eine Stützschulter (94) definiert, wobei die zylindrische Endplatte (84) zwischen der Schulter (94) und dem rohrförmigen Gehäuse (64) in Eingriff steht.

## Revendications

1. Train de roulement pour chenille (21) du type agencé pour être relié à un châssis (12) de véhicule et pour être soutenu par un ensemble de roues de roulement (130), le train comprenant un corps principal (62) comportant une base allongée (63) soutenue en utilisation par les roues de roulement (130) et possédant une première et une seconde partie d'extrémité (65, 67) et un collier (68) relié à la poutre tubulaire (83) du corps principal (62) et définissant à travers elle une ouverture transversale (150), caractérisé en ce que la base allongée (63) est de section transversale en forme de canal ou de tube rectangulaire possédant un caisson tubulaire (64) relié à recouvrement à la première partie d'extrémité (65), et une structure en tôle (66) reliée à recouvrement à la seconde partie d'extrémité (67) de la base (63) pour former avec elle une poutre tubulaire (83) de section transversale généralement rectangulaire, d'une profondeur essentiellement plus grande que la largeur, et un épaulement de soutien (94) pour renforcer la liaison au caisson tubulaire (64).

2. Train (21) selon la revendication 1, dans lequel la seconde partie d'extrémité (67) de la base (63) est mise en forme de tubes de section transversale rectangulaire.

3. Train (21) selon la revendication 2, dans lequel la première partie d'extrémité (65) de la base (63) définit une fente longitudinale supérieure (98) pour y loger le caisson tubulaire (64).

4. Train (21) selon la revendication 2, dans lequel la structure en tôle (66) comporte une tôle mise en forme (86) possédant une section transversale en forme générale de U renversé.

5. Train (21) selon la revendication 4, dans lequel le corps principal (62) comporte une plaque cylindrique d'extrémité (84) reliée entre le caisson tubulaire (64) et l'épaulement d'appui (94) du moyen de tôle (66).

6. Train (21) selon la revendication 5, dans lequel la structure en tôle (66) comporte une paire de membres de renfort (92) de forme convexe reliés à la tôle mise en forme (86) et à la tôle d'extrémité (84).

7. Train (21) selon la revendication 1, dans lequel le corps principal (62) comporte un ensemble de pattes de montage (124) pour roues de roulement fixées à la surface de base de la base (63).

8. Train (21) selon la revendication 1, dans lequel le caisson tubulaire (64) possède un axe central (71) et un plan central vertical (70) orienté longitudinalement traversant l'axe central (71), le collier (68) définissant une bride intérieure de montage (148) située essentiellement sur le plan central (70).

9. Train (21) selon la revendication 1, dans lequel la première partie d'extrémité (65) de la base (63) est de section transversale en forme générale d'un U formée d'une seule pièce et reliée par soudage au caisson tubulaire (64).

10. Train (21) selon la revendication 9, dans lequel la seconde partie d'extrémité (67) de la base (63) est de section transversale généralement rectangulaire et formée d'une seule pièce, relié par soudage à la structure en tôle (66).

11. Train (21) selon la revendication 1, dans lequel la poutre tubulaire (83) est généralement rectangulaire et possède une hauteur "H" égale à environ deux à trois fois la largeur "B".

12. Train (21') selon la revendication 1, dans lequel la base (63') comporte une première tôle mise en forme (214) de section transversale en forme de U, la structure en tôle (66') comportant une seconde tôle mise en forme (216) de section transversale en forme de U et une tôle supérieure (218).

13. Train (21) selon la revendication 1, dans lequel la base (63) ou la structure en tôle (66) comporte une tôle mise en forme par laminage possédant une section transversale rectangulaire, l'autre comportant une tôle mise en forme par laminage possédant une section transversale en forme de U.

14. Train (21'') selon la revendication 1, dans lequel la poutre tubulaire (83'') comporte des tôles latérales intérieure et extérieure (220, 222) de section transversale en forme générale de C.

15. Train (21'') selon la revendication 14, dans lequel la poutre tubulaire (83'') comporte des moyens de renfort transversal (228) reliant structurellement les tôles latérales (220, 222) en vue de renforcer le corps principal (62'').

16. Train (21) selon la revendication 1, dans lequel la base (63) ou la structure en tôle (66) comporte une première tôle (76, 77, 78, 79) mise par laminage en forme d'un tube de section transversale rectangulaire, l'autre comportant une seconde tôle (86) mise par laminage en forme d'un canal de section transversale en forme de U.

17. Ensemble (21) selon la revendication 16, dans lequel la base (63) et la structure en tôle (66) définissent ensemble une poutre tubulaire (83) de section transversale généralement rectangulaire possédant une profondeur essentiellement plus grande que sa largeur.

18. Train (21) selon la revendication 17, dans lequel la poutre tubulaire (83) possède une hauteur "H" égale à environ deux à trois fois la largeur "B".

19. Train (21) selon la revendication 16, dans lequel la structure en tôle (66) comporte une plaque cylindrique d'extrémité (84) et définit un épaulement d'appui (94), la plaque cylindrique d'extrémité (84) étant accrochée entre l'épaulement (94) et le caisson tubulaire (64).
